# FASCICULE DE BREVET EUROPEEN

(11) **EP 3 202 603 B1**
(45) Date de publication et mention de la délivrance du brevet: **08.08.2018**
(21) Numéro de dépôt: 17150388.1
(22) Date de dépôt: 05.01.2017
(51) Int. Cl.: B60G 21/055, B60G 11/60

(54) **SYSTEME DE SUSPENSION A BARRE ANTI-DEVERS D'UN VÉHICULE**
AUFHÄNGUNGSSYSTEM MIT EINEM QUERSTABILISATOR EINES FAHRZEUGS
SUSPENSION SYSTEM WITH STABILISER BAR OF A VEHICLE

(30) Priorité: 04.02.2016 FR 1650876
(43) Date de publication de la demande: 09.08.2017
(73) Titulaire: PSA Automobiles SA, 78300 Poissy (FR)
(72) Inventeur: KANOUNNIKOFF, Thomas, 92500 RUEIL MALMAISON (FR); WASCHEUL, Michael, 78260 ACHERES (FR)

(56) Documents cités:
- WO-A1-03/008215
- DE-A1- 10 237 439
- DE-A1- 19 637 095
- DE-U1-202013 007 733
- FR-A- 775 996
- FR-A1- 2 742 382
- JP-A- H04 113 913
- JP-A- H04 169 320
- JP-A- 2001 063 338

## Description

L'invention concerne un système de suspension à barre anti-dévers d'un véhicule, notamment automobile.

L'invention vise également un véhicule muni d'un tel système de suspension.

La barre anti-dévers d'un véhicule, notamment automobile, est un dispositif connu intégré à un système de suspension d'un train du véhicule, et comprenant une barre en U reliée au châssis du véhicule et dont les extrémités sont respectivement reliées via des biellettes aux amortisseurs du train. La barre anti-dévers a pour fonction de limiter la déformation du système de suspension de sorte que les deux pneumatiques du train conservent de l'adhérence lorsque le véhicule est dans un virage. En outre, la barre anti-dévers limite le roulis inconfortable du véhicule dans un virage.

Cependant, la barre anti-dévers engendre des phénomènes dynamiques inconfortables lorsque le véhicule se déplace en ligne droite, notamment sur route bosselée. Ces phénomènes inconfortables, appelés renvois de roulis, sont engendrés par la raideur du train due à la présence de la barre anti-dévers.

De manière à améliorer le confort du véhicule, il est connu d'utiliser dans son système de suspension des biellettes dites actives. Ces biellettes sont du type comportant un ressort, un vérin et une réserve de fluide hydraulique déportée par rapport à l'axe longitudinal de la biellette.

Le document DE 102009013053 décrit un système de suspension dont la barre anti-dévers est constituée de deux demi-barres reliées par un moteur rotatif, les deux demi-barres étant mobiles en rotation l'une par rapport à l'autre pour permettre le contrôle de la raideur de la barre anti-devers en fonction des conditions de conduite. Pour permettre le mouvement des deux demi-barres l'une par rapport à l'autre, l'une des biellettes reliant l'une des demi-barres au corps de l'amortisseur correspondant est un vérin hydraulique. Un autre système de suspension pertinent est décrit dans le document JP 2001 063 338 A1.

Cependant, de tels systèmes de suspension sont compliqués et coûteux à mettre en place. D'autre part, ils ne permettent pas de désactiver la fonction anti-dévers de la barre anti-dévers et de fait, les renvois de roulis décrits ci-dessus ne peuvent être supprimés.

La présente invention a pour but de pallier les inconvénients ci-dessus de l'art antérieur.

Pour atteindre ce but, l'invention concerne un système de suspension d'un véhicule, notamment automobile, comprenant deux amortisseurs, une barre anti-dévers reliée aux amortisseurs respectivement par deux pièces de liaison, les extrémités de chaque pièce de liaison étant respectivement reliées de manière articulée à la barre anti-dévers et au corps de l'amortisseur correspondant, **caractérisé en ce** qu'au moins l'une des deux pièces de liaison comprend une pluralité d'éléments enfilés sur un lien souple dont une extrémité est reliée à une extrémité de la barre anti-dévers et l'autre extrémité est reliée à un dispositif apte à modifier la tension du lien souple et solidaire du corps de l'amortisseur, le lien souple étant apte à coulisser au travers d'une pièce rigide fixée au corps de l'amortisseur et maintenant le lien souple à distance de l'amortisseur, et en ce que le dispositif apte à modifier la tension du lien souple permet sélectivement de tendre le lien souple pour rigidifier la pièce de liaison par compression des éléments enfilés entre la pièce rigide et l'extrémité de la barre anti-dévers et assurer la fonction anti-dévers de cette barre et de détendre le lien souple pour rendre souple la pièce de liaison désactivant la fonction anti-dévers de la barre anti-dévers.

Selon une autre particularité, l'autre pièce de liaison est soit identique à la précédente pièce de liaison, soit est une biellette rigide.

Selon une autre particularité, le dispositif apte à modifier la tension du lien souple est un motoréducteur réversible relié à un dispositif enrouleur apte à enrouler ou dérouler le lien souple.

Selon une autre particularité, les éléments enfilés sont logés dans un fourreau élastiquement déformable préformé en forme de V, et dont la pointe est orientée vers le corps de l'amortisseur correspondant en configuration souple de la pièce de liaison, et se déformant rectilignement en configuration rigide de la pièce de liaison.

Selon une autre particularité, chaque élément enfilé est une bille à perçage axial traversée par le lien souple et comprenant deux méplats parallèles et perpendiculaires à l'axe du perçage, les méplats adjacents des billes étant en appui les uns contre les autres en configuration rigide de la pièce de liaison.

Selon une autre particularité, le motoréducteur réversible comprend un commutateur relié à la batterie du véhicule et apte à changer le sens de rotation du motoréducteur, pour permettre le changement du sens de rotation du dispositif enrouleur.

Selon une autre particularité, le commutateur est piloté selon une loi de commande mise en oeuvre par un calculateur du véhicule.

Selon une autre particularité, le lien souple est apte à coulisser dans une gaine située entre la pièce rigide et le dispositif apte à modifier la tension du lien souple.

Selon une autre particularité, le lien souple est un câble d'acier.

L'invention concerne également un véhicule automobile comprenant un système de suspension tel que défini précédemment installé sur le train avant du véhicule.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 représente une vue de face d'un système de suspension à barre anti-dévers selon l'invention, comprenant d'un côté du véhicule une pièce de liaison en configuration rigide ;
- La figure 2 est similaire à la figure 1 avec la pièce de liaison en configuration souple pliée en compas vers l'amortisseur correspondant du véhicule ;
- La figure 3 représente une vue en coupe axiale d'une partie de la pièce de liaison fixé au corps d'amortisseur correspondant.

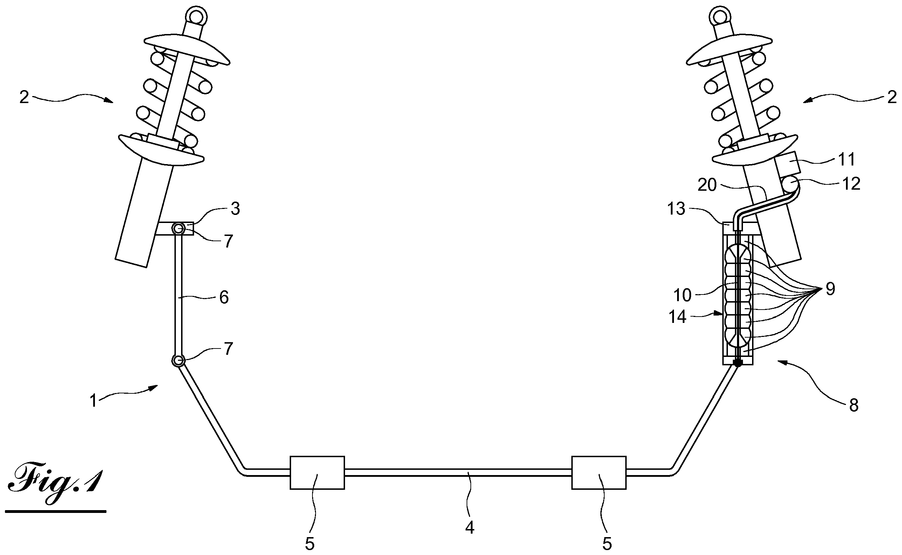

On décrit ci-après l'invention en se référant aux figures 1 à 3, qui a pour objet un système de suspension 1 d'un véhicule, notamment un véhicule automobile.

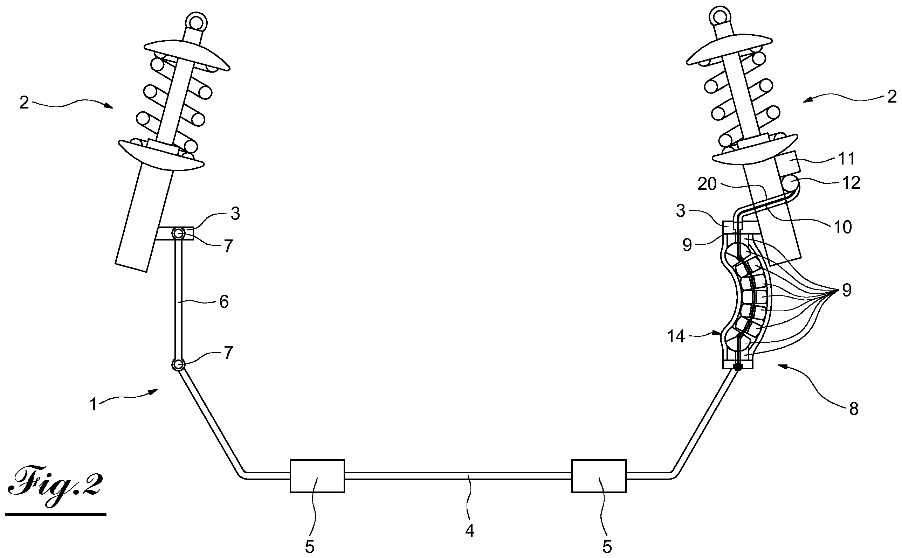

Le système de suspension 1 représenté sur les figures 1 et 2 comprend deux amortisseurs 2 reliés respectivement d'une part à la structure de caisse du véhicule et d'autre part à un porte-fusée (non représenté) supportant la fusée associée à une roue du véhicule.

Le système de suspension 1 comprend en outre une barre anti-dévers 4, ou barre stabilisatrice ou encore barre antiroulis, montée au niveau du train du véhicule, par exemple au niveau du train avant. La barre anti-dévers 4 a une forme générale en U, et est reliée au châssis du véhicule par l'intermédiaire de deux paliers 5, appelés « silent blocks ».

La barre anti-dévers 4 est positionnée transversalement par rapport au véhicule, et est reliée aux amortisseurs 2 du système de suspension 1 respectivement par une pièce de liaison de type biellette rigide classique 6 et par une pièce de liaison 8 selon l'invention.

Les extrémités de la biellette rigide 6 sont reliées par des articulations à rotules 7 respectivement à la barre anti-dévers 4 et à un moyen de fixation 3 solidaire du corps de l'amortisseur correspondant 2.

De manière à permettre la désactivation de la fonction anti-dévers de la barre anti-dévers 4 en cas de besoin, par exemple lorsque le véhicule se déplace en ligne droite, la pièce de liaison 8 selon l'invention reliant la barre anti-dévers 4 au système de suspension 1 comprend une pluralité d'éléments enfilés 9 sur un lien souple 10 qui traverse des perçages axiaux 15 des éléments enfilés. Ce lien souple 10 est relié par ses extrémités respectivement à l'extrémité correspondante de la barre anti-dévers 4 et à un dispositif apte à modifier la tension du lien souple. La structure et la fonction de ce dispositif, solidaire du corps de l'amortisseur 2, seront précisées plus loin dans la description.

Dans le mode de réalisation présenté sur les figures, le lien souple 10 est un câble d'acier. Pour la commodité, le terme « câble » sera utilisé dans la suite de la description, mais il est bien évident que tout type de lien souple 10 suffisamment résistant pour transmettre les efforts de l'amortisseur correspondant 2 à la barre anti-dévers 4 conviendra.

La pièce de liaison 8 comprend également une pièce rigide 13 en forme d'équerre, dont une branche est fixée sur le corps de l'amortisseur 2 et dont l'autre branche comprend au voisinage de son extrémité un orifice 17 dans lequel le câble 10 est apte à coulisser. Cette pièce en forme d'équerre 13 permet notamment de maintenir le câble 10 à distance de l'amortisseur correspondant 2.

Les éléments enfilés 9 sur le câble sont disposés entre l'extrémité correspondante de la barre anti-devers 4 et la pièce rigide en forme d'équerre 13. Les deux éléments 9a les plus proches respectivement de la barre anti-dévers 4 et de la pièce en forme d'équerre 13 sont constitués par deux rondelles à portée sphérique concave. Les éléments enfilés 9 comprennent également deux billes 9b, qui présentent deux faces sphériques 19 destinées à venir en contact contre les surfaces concaves 18 respectivement des deux rondelles à portées sphériques 9a. Ces deux billes 9b présentent en outre chacune un méplat 16 perpendiculaire à l'axe du perçage 15 de la bille à l'opposé de sa face sphérique.

Les autres éléments enfilés 9 sont des billes 9c traversées par le câble 10 et comprennent deux méplats 16 parallèles et perpendiculaires à l'axe du perçage 15 de passage du câble.

Le dispositif apte à modifier la tension du câble comprend un motoréducteur réversible 11, par exemple un actionneur, alimenté par une batterie du véhicule. ce motoréducteur 11 est relié à un dispositif enrouleur 12, comportant un axe de rotation relié à l'arbre de sortie du motoréducteur 11, auquel le câble 10 est attaché et autour duquel peut s'enrouler ou se dérouler le câble 10. Le dispositif enrouleur 12 est ainsi apte, en fonction du sens de rotation de l'arbre de sortie du motoréducteur 11, d'enrouler ou de dérouler le câble 10.

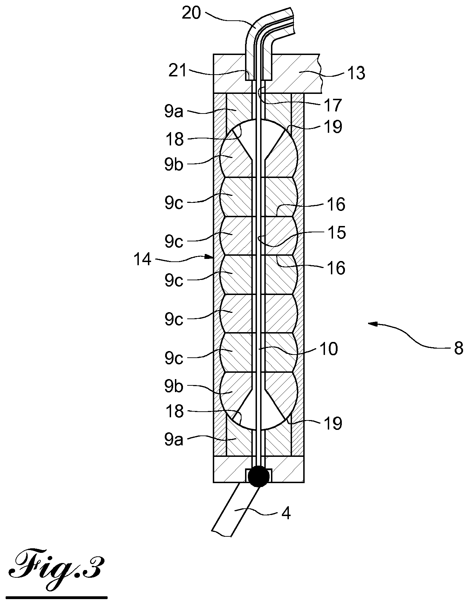

De manière optionnelle, pour protéger la portion de câble située entre le dispositif apte à tendre le câble et la pièce en équerre 13, une gaine 20 entoure cette portion de câble. Comme représenté sur la figure 3, une extrémité de la gaine 20 est logée dans un lamage 21 réalisé autour de l'orifice 17 de la pièce en équerre 13 et l'autre extrémité est en butée dans un lamage du corps de l'enrouleur 12.

En outre, le motoréducteur 11 comprend un commutateur relié à une batterie du véhicule pour permettre de changer le sens de rotation de l'arbre de sortie du motoréducteur 11. Ce commutateur est piloté par une loi de commande mise en oeuvre par un calculateur du véhicule. Un exemple de loi de commande sera décrit plus loin.

Pour modifier la tension du câble 10 de la pièce de liaison 13 et activer ou désactiver la fonction anti-dévers de la barre anti-dévers 4, le commutateur piloté par la loi de commande permet sélectivement de tendre ou de détendre le câble 10.

Pour activer la fonction anti-dévers de la barre anti-dévers 4, le commutateur est configuré de sorte que le sens de rotation de l'arbre de sortie du motoréducteur 11 et du dispositif enrouleur 12 permette l'enroulement du câble 10 dans le dispositif enrouleur 12. L'enroulement du câble induit son coulissement dans l'orifice 17 de la pièce en équerre 13 vers le dispositif enrouleur 12 ce qui provoque la compression des éléments enfilés 9 entre la pièce en équerre 13 et l'extrémité de la barre anti-dévers 4 : les méplats 16 adjacents des billes 9c sont alors en appui les uns contre les autres, et les deux billes extrêmes 9b comprenant un seul méplat 16 sont en appui contre la surface concave 18 respectivement des deux rondelles à portées sphériques 9a.

En se comprimant, les éléments enfilés 9 forment alors un ensemble rectiligne et rigide qui est à même de transmettre les efforts en compression de l'amortisseur correspondant 2 vers la barre anti-dévers 4, les efforts en traction étant transmis par le câble tendu 10. La configuration de la pièce de liaison 8 est dite rigide.

Pour désactiver la fonction anti-dévers de la barre anti-dévers 4, le commutateur est configuré de sorte que le sens de rotation de l'arbre de sortie du motoréducteur 11 et du dispositif enrouleur 12 permette le déroulement du câble 10 dudit dispositif enrouleur 12. Le déroulement du câble 10 induit son coulissement dans l'orifice 17 de la pièce en équerre 13 vers ladite pièce, ce qui provoque la détente du câble 10 notamment entre la pièce en équerre 13 et l'extrémité de la barre anti-dévers 4 : le câble 10 et les éléments enfilés 9 forment un ensemble souple qui ne peut plus transmettre les efforts de l'amortisseur correspondant 2 à la barre anti-dévers 4.

Afin de contrôler la déformation de la pièce de liaison 8 en configuration souple, les éléments enfilés 9 sont logées dans un fourreau 14 en matière plastique souple, par exemple en silicone. Ce fourreau 14 élastiquement déformable est préformé en forme de V, dont la pointe est orientée vers le corps de l'amortisseur correspondant 2. Ainsi, lorsque la pièce de liaison 8 est en configuration souple, le fourreau 14 est dans sa forme en V ce qui évite tout risque d'interférence de la pièce de liaison 8 avec les autres éléments de la suspension 1 ou même du véhicule. Lorsque la pièce de liaison 8 est en configuration rigide, la souplesse du fourreau 14 lui permet de se déformer et d'adopter une forme sensiblement rectiligne, en maintenant les éléments enfilés 9 à l'intérieur du fourreau 14.

La loi de commande pilotant le commutateur peut intégrer deux situations de conduite : une situation dite de confort, dans laquelle la fonction anti-dévers de la barre anti-devers 4 est activée pour limiter le roulis du véhicule, et une situation dite sport, dans laquelle la fonction anti-dévers de la barre anti-dévers 4 est désactivée.

Si des capteurs du véhicule ne détecte aucun mouvement vertical des roues du véhicule, alors le calculateur en déduit que le véhicule circule sur sol plat et que l'assiette est plane. Le calculateur commande alors le déroulement du câble 10 de la pièce de liaison 8 et désactive alors la fonction anti-dévers. Dans le cas contraire, si la moindre situation de roulis est détectée notamment une modification de l'assiette du véhicule ou un mouvement vertical d'une roue, alors le calculateur commande l'enroulement du câble 10 de la pièce de liaison 8 et active ainsi la fonction anti-dévers de la barre anti-dévers 4.

Ainsi, le comportement de la barre anti-dévers 4 est automatiquement sélectionné en fonction des situations de conduite. Dans les virages, le calculateur commande l'enroulement du câble 10 induisant la rigidification de la pièce de liaison 8 et l'activation de la fonction anti-dévers de la barre anti-dévers 4 pour limiter la déformation du système de suspension 1 et de fait limiter le roulis dans les virages. A l'inverse, en ligne droite, le calculateur commande le déroulement du câble 10 induisant le retour à une configuration souple de la pièce de liaison 8 et la désactivation de la fonction anti-dévers de la barre anti-dévers 4 pour améliorer le confort de conduite.

La configuration telle que décrite n'est pas limitée au mode de réalisation décrit précédemment et représenté sur les figures. Elle n'a été donnée qu'à titre d'exemple non limitatif. De multiples modifications peuvent être apportées sans pour autant sortir du cadre de l'invention. En particulier on pourrait imaginer que les deux pièces de liaison 6, 8 du système de suspension 1 du véhicule soient des pièces de liaison selon l'invention. Mais de préférence l'une des deux pièces de liaison 6 est une biellette rigide classique. En outre, le commutateur peut être piloté manuellement et non par une loi de commande. Dans ce cas, le commutateur comprend un interrupteur par exemple logé dans l'habitacle du véhicule, et c'est alors le conducteur du véhicule qui est en mesure de sélectionner le comportement de la barre anti-dévers 4 en fonction des situations de conduite.

## Revendications

1. Système de suspension (1) d'un véhicule, notamment automobile, comprenant deux amortisseurs (2), une barre anti-dévers (4) reliée aux amortisseurs (2) respectivement par deux pièces de liaison (6, 8), les extrémités de chaque pièce de liaison étant respectivement reliées de manière articulée à la barre anti-dévers (4) et au corps de l'amortisseur (2) correspondant, **caractérisé en ce qu'**au moins l'une des deux pièces de liaison (8) comprend une pluralité d'éléments enfilés (9) sur un lien souple (10) dont une extrémité est reliée à une extrémité de la barre anti-dévers (4) et l'autre extrémité est reliée à un dispositif apte à modifier la tension du lien souple (10) et solidaire du corps de l'amortisseur (2), le lien souple (10) étant apte à coulisser au travers d'une pièce rigide (13) fixée au corps de l'amortisseur (2) et maintenant le lien souple (10) à distance de l'amortisseur (2), et **en ce que** le dispositif apte à modifier la tension du lien souple (10) permet sélectivement de tendre le lien souple pour rigidifier la pièce de liaison (8) par compression des éléments enfilés (9) entre la pièce rigide (13) et l'extrémité de la barre anti-dévers (4) et assurer la fonction anti-dévers de cette barre (4) et de détendre le lien souple (10) pour rendre souple la pièce de liaison (8) désactivant la fonction anti-dévers de la barre anti-dévers (4).

2. Système de suspension (1) selon la revendication 1, **caractérisé en ce que** l'autre pièce de liaison (6) est soit identique à la précédente pièce de liaison (8), soit est une biellette rigide.

3. Système de suspension (1) selon la revendication 1 ou 2, **caractérisé en ce que** le dispositif apte à modifier la tension du lien souple est un motoréducteur réversible (11) relié à un dispositif enrouleur (12) apte à enrouler ou dérouler le lien souple (10).

4. Système de suspension (1) selon l'une quelconque des revendications 1 à 3, **caractérisé en ce que** les éléments enfilés (9) sont logés dans un fourreau élastiquement déformable (14) préformé en forme de V, et dont la pointe est orientée vers le corps de l'amortisseur (2) correspondant en configuration souple de la pièce de liaison (8), et se déformant rectilignement en configuration rigide de la pièce de liaison (8).

5. Système de suspension (1) l'une quelconque des revendications 1 à 4, **caractérisé en ce que** chaque élément enfilé est une bille (9c) à perçage axial (15) traversée par le lien souple (10) et comprenant deux méplats (16) parallèles et perpendiculaires à l'axe du perçage (15), les méplats (16) adjacents des billes (9c) étant en appui les uns contre les autres en configuration rigide de la pièce de liaison (8).

6. Système de suspension (1) selon l'une quelconque des revendications 3 à 5, **caractérisé en ce que** le motoréducteur réversible (11) comprend un commutateur relié à la batterie du véhicule et apte à changer le sens de rotation du motoréducteur (11), pour permettre le changement du sens de rotation du dispositif enrouleur (12).

7. Système de suspension (1) selon la revendication 6, **caractérisé en ce que** le commutateur est piloté selon une loi de commande mise en oeuvre par un calculateur du véhicule.

8. Système de suspension (1) selon l'une quelconque des revendications 1 à 7, **caractérisé en ce que** le lien souple (10) est apte à coulisser dans une gaine (20) située entre la pièce rigide (13) et le dispositif apte à modifier la tension du lien souple.

9. Système de suspension (1) selon l'une quelconque des revendications 1 à 8, **caractérisé en ce que** le lien souple (10) est un câble d'acier.

10. Véhicule automobile comprenant un système de suspension (1) selon l'une quelconque des revendications 1 à 9 installé sur le train avant du véhicule.

## Patentansprüche

1. Aufhängungssystem (1) eines Fahrzeugs, insbesondere eines Kraftfahrzeugs, das zwei Dämpfer (2), einen Querstabilisator (4), der mit den Dämpfern (2) jeweils durch zwei Verbindungsteile (6, 8) verbunden ist, wobei die Enden jedes Verbindungsteils jeweils gelenkig mit dem Querstabilisator (4) und dem Körper des entsprechenden Dämpfers (2) verbunden sind, umfasst, **dadurch gekennzeichnet, dass** mindestens eines der zwei Verbindungsteile (8) eine Vielzahl von Elementen (9) umfasst, die auf eine biegsame Verbindung (10) aufgezogen sind, von der ein Ende mit einem Ende des Querstabilisators (4) verbunden ist, und das andere Ende mit einer Vorrichtung verbunden ist, die geeignet ist, die Spannung der biegsamen Verbindung (10) zu ändern, und mit dem Körper des Dämpfers (2) fest verbunden ist, wobei die biegsame Verbindung (10) geeignet ist, durch ein starres Teil (13), das an dem Körper des Dämpfers (2) befestigt ist und die biegsame Verbindung (10) von dem Dämpfer (2) beabstandet hält, hindurch gleiten kann, und dass die Vorrichtung, die geeignet ist, die Spannung der biegsamen Verbindung (10) zu ändern, es erlaubt, die biegsame Verbindung selektiv zu spannen, um das Verbindungsteil (8) durch Kompression der Elemente (9), die zwischen dem starren Teil (13) und dem Ende des Querstabilisators (4) aufgezogen sind, zu versteifen und die Querstabilisationsfunktion dieses Stabilisators (4) sicherzustellen, und die biegsame Verbindung (10) zu entspannen, um das Verbindungsteil (8) biegsam zu machen, indem die Querstabilisationsfunktion des Querstabilisators (4) deaktiviert wird.

2. Aufhängungssystem (1) nach Anspruch 1, **dadurch gekennzeichnet, dass** das andere Verbindungsteil (6) entweder mit dem vorhergehenden Verbindungsteil (8) identisch ist oder ein starrer Schwingarm ist.

3. Aufhängungssystem (1) nach Anspruch 1 oder 2, **dadurch gekennzeichnet, dass** die Vorrichtung, die geeignet ist, die Spannung der biegsamen Verbindung zu ändern, ein umschaltbarer Getriebemotor (11) ist, der mit einer Aufrollvorrichtung (12) verbunden ist, die geeignet ist, die biegsame Verbindung (10) aufzuwickeln oder abzuwickeln.

4. Aufhängungssystem (1) nach einem der Ansprüche 1 bis 3, **dadurch gekennzeichnet, dass** die aufgezogenen Elemente (9) in einer elastisch verformbaren Hülse (14) untergebracht sind, die in V-Form vorgeformt ist, und deren Spitze zu dem Körper des entsprechenden Dämpfers (2) in biegsamer Konfiguration des Verbindungsteils (8) gerichtet ist und sich geradlinig in starrer Konfiguration des Verbindungsteils (8) verformt.

5. Aufhängungssystem (1) nach einem der Ansprüche 1 bis 4, **dadurch gekennzeichnet, dass** jedes aufgezogene Element eine Kugel (9c) mit axialer Bohrung (15) ist, die von der biegsamen Verbindung (10) durchquert ist und zwei parallele und zu der Achse der Bohrung (15) senkrechte Flachteile (16) umfasst, wobei die Flachteile (16), die zu den Kugeln (9c) benachbart sind, in starrer Konfiguration des Verbindungsteils (8) aneinander anliegen.

6. Aufhängungssystem (1) nach einem der Ansprüche 3 bis 5, **dadurch gekennzeichnet, dass** der umschaltbare Getriebemotor (11) einen Umschalter umfasst, der mit der Batterie des Fahrzeugs verbunden und geeignet ist, die Drehrichtung des Getriebemotors (11) zu ändern, um den Wechsel der Drehrichtung der Aufrollvorrichtung (12) zu erlauben.

7. Aufhängungssystem (1) nach Anspruch 6, **dadurch gekennzeichnet, dass** der Umschalter gemäß einem Steuergesetz gesteuert wird, das von einem Rechner des Fahrzeugs umgesetzt wird.

8. Aufhängungssystem (1) nach einem der Ansprüche 1 bis 7, **dadurch gekennzeichnet, dass** die biegsame Verbindung (10) geeignet ist, in einer Hülse (20), die zwischen dem starren Teil (13) und der Vorrichtung, die geeignet ist, die Spannung der biegsamen Verbindung zu ändern, gleiten kann.

9. Aufhängungssystem (1) nach einem der Ansprüche 1 bis 8, **dadurch gekennzeichnet, dass** diese biegsame Verbindung (10) ein Stahlkabel ist.

10. Kraftfahrzeug, das ein Aufhängungssystem (1) nach einem der Ansprüche 1 bis 9, das auf der Vorderachse des Fahrzeugs installiert ist, umfasst.

## Claims

1. A suspension system (1) of a vehicle, in particular a motor vehicle, including two shock absorbers (2), a stabilizer bar (4) connected to the shock absorbers (2) respectively by two linking parts (6, 8), the ends of each linking part being respectively connected in an articulated manner to the stabilizer bar (4) and to the corresponding shock absorber body (2), **characterized in that** at least one of the two linking parts (8) includes a plurality of threaded elements (9) on a flexible link (10), one end of which is connected to an end of the stabilizer bar (4) and the other end of which is connected to a device able to modify the tension of the flexible link (10) and integral with the shock absorber body (2), the flexible link (10) being able to slide through a rigid part (13) fixed to the body of the shock absorber (2) and maintaining the flexible link (10) at a distance from the shock absorber (2), and **in that** the device able to modify the tension of the flexible link (10) permits selectively tensing the flexible link so as to stiffen the linking part (8) by compression of the threaded elements (9) between the rigid part (13) and the end of the stabilizer bar (4) and to ensure the stabilizing function of this bar (4), and loosening the flexible link (10) to make the linking piece (8) flexible, deactivating the stabilizing function of the stabilizer bar (4).

2. The suspension system (1) according to Claim 1, **characterized in that** the other linking part (6) is either identical to the preceding linking part (8), or is a rigid rod.

3. The suspension system (1) according to Claim 1 or 2, **characterized in that** the device able to modify the tension of the flexible link is a reversible geared motor (11) connected to a winder device (12) able to wind or unwind the flexible link (10).

4. The suspension system (1) according to any one of Claims 1 to 3, **characterized in that** the threaded elements (9) are housed in an elastically deformable sheath (14) preformed in a V shape, and the point of which is oriented towards the corresponding body of the shock absorber (2) in flexible configuration of the linking part (8), and deforming in a rectilinear manner in rigid configuration of the linking part (8).

5. The suspension system (1) according to any one of Claims 1 to 4, **characterized in that** each threaded element is a ball (9c) with an axial bore (15) passed through by the flexible link (10) and including two flattened portions (16) which are parallel and are perpendicular to the axis of the bore (15), the adjacent flattened portions (16) of the balls (9c) resting against one another in rigid configuration of the linking part (8).

6. The suspension system (1) according to any one of Claims 3 to 5, **characterized in that** the reversible geared motor (11) includes a switch connected to the battery of the vehicle and able to change the direction of rotation of the geared motor (11), so as to permit the changing of rotation direction of the winder device (12).

7. The suspension system (1) according to Claim 6, **characterized in that** the switch is controlled according to a command law implemented by a computer of the vehicle.

8. The suspension system (1) according to any one of Claims 1 to 7, **characterized in that** the flexible link (10) is able to slide in a duct (20) situated between the rigid part (13) and the device able to modify the tension of the flexible link.

9. The suspension system (1) according to any one of Claims 1 to 8, **characterized in that** the flexible link (10) is a steel cable.

10. A motor vehicle including a suspension system (1) according to any one of Claims 1 to 9 installed on the front axle of the vehicle.
